# FASCICULE DE BREVET EUROPEEN

(11) **EP 2 591 958 B1**
(45) Date de publication et mention de la délivrance du brevet: **28.12.2016**
(21) Numéro de dépôt: 12191723.1
(22) Date de dépôt: 08.11.2012
(51) Int. Cl.: B60S 1/34, B60S 1/52

(54) **Essuie-glace et dispositif de maintien d'une canalisation d'alimentation en produit lave-glace à un bras d'actionnement de balai d'essuie-glace**
Scheibenwischer und Vorrichtung zur Befestigung einer Zuführungsleitung eines Scheibenwaschprodukts zu einem Betätigungsarm eines Scheibenwischerblatts
Windscreen wiper and device for holding a pipe for supplying a windscreen-washing product against an actuating arm of the wiper blade

(30) Priorité: 09.11.2011 FR 1160179
(43) Date de publication de la demande: 15.05.2013
(73) Titulaire: Valeo Systèmes d'Essuyage, 78322 Le Mesnil Saint Denis (FR)
(72) Inventeur: Picot, Philippe, 63770 Les Ancizes Comps (FR)
(74) Mandataire: Callu Danseux, Violaine

(56) Documents cités:
- DE-A1- 2 942 086
- DE-A1- 10 031 417
- DE-A1- 19 815 171
- FR-A- 1 307 974
- GB-A- 2 385 513
- US-A- 5 430 909

## Description

L'invention concerne un dispositif de maintien d'une canalisation d'alimentation en produit lave-glace à un bras d'actionnement de balai d'essuie-glace de véhicule automobile. L'invention concerne également un essuie-glace muni dudit dispositif de maintien.

La canalisation d'alimentation en produit lave-glace est raccordée à un réservoir du véhicule automobile pour alimenter des dispositifs de projection. Il est connu de faire courir la canalisation souple le long du bras d'actionnement pour alimenter un dispositif de projection de liquide de lavage porté par exemple, par un balai d'essuie-glace monté articulé à l'extrémité libre du bras. La canalisation souple est par exemple maintenue par des agrafes externes agencées autour du bras d'actionnement.

Afin d'intégrer au mieux la canalisation souple à l'essuie-glace, il est également connu de faire courir la canalisation à l'intérieur d'un ressort de pression d'essuyage logé dans une cavité agencée dans le bras d'actionnement. Ainsi, on dissimule la canalisation dans le bras d'actionnement et on améliore aussi sa protection contre les chocs et les frottements susceptibles de la détériorer. En outre ainsi logé dans le ressort, la canalisation est maintenue à l'écart de la vitre à essuyer. Toutefois, du fait notamment de la souplesse de la canalisation d'alimentation, son insertion dans le logement axial du ressort constitue une opération de montage délicate et compliquée.

Il est également connu selon le document DE 100 31 417 d'assurer la retenue de la canalisation d'alimentation à l'aide d'une plaque de fermeture du bras.

Afin de résoudre ces problèmes ainsi que d'autres, l'invention propose un dispositif de maintien permettant de fixer facilement la canalisation d'alimentation au bras d'actionnement de balai d'essuie-glace, tout en dissimulant la canalisation d'alimentation et en la maintenant à l'écart de la vitre d'essuyage et de la grille du véhicule.
A cet effet, la présente invention a pour objet un dispositif de maintien d'une canalisation d'alimentation en produit lave-glace à un bras d'actionnement de balai d'essuie-glace de véhicule automobile, ledit dispositif de maintien comportant un moyen de fixation de la canalisation d'alimentation, caractérisé en ce qu'il comporte en outre un étrier de retenue élastique possédant une forme sensiblement complémentaire à au moins une partie du ressort disposée à proximité dudit étrier et étant configuré pour coopérer avec la périphérie extérieure d'un ressort de pression d'essuyage logé dans une cavité de la partie carter du bras d'actionnement ou configuré pour être agencé autour d'un ressort de pression d'essuyage logé dans une cavité de la partie carter du bras d'actionnement et configuré pour coopérer avec les flancs internes de ladite cavité, pour retenir la canalisation d'alimentation au bras d'actionnement.

Selon une ou plusieurs caractéristiques du dispositif de maintien, prise seule ou en combinaison :
- l'étrier de retenue comporte une première fourche configurée pour s'emboîter élastiquement sur les spires du ressort de pression d'essuyage,
- l'étrier de retenue comporte un moyen anti-rotation,
- le moyen anti-rotation est formé par au moins une deuxième fourche pouvant coopérer avec les flancs internes de la cavité par déformation élastique,
- le dispositif de maintien comporte deux deuxièmes fourches, la première fourche étant plus longue que les deuxièmes fourches et la première fourche étant interposée entre les deux deuxièmes fourches,
- ledit moyen de fixation de la canalisation d'alimentation comporte un clip,
- ledit dispositif de maintien est réalisé en une seule pièce constituée de l'étrier de retenue et du moyen de fixation de la canalisation d'alimentation,
- ledit dispositif de maintien présente une longueur supérieure à dix millimètres.

L'invention a aussi pour objet un essuie-glace comportant un bras d'actionnement de balai d'essuyage et une canalisation d'alimentation de dispositif de projection de produit lave-glace, caractérisé en ce qu'il comporte un dispositif de maintien tel que décrit précédemment au moins partiellement logé dans la cavité du bras d'actionnement, retenant la canalisation d'alimentation au bras d'actionnement.

Selon un premier aspect, l'étrier de retenue élastique est emboîté élastiquement autour des spires d'extrémité du ressort de pression d'essuyage, situées du côté de l'extrémité arrière dudit ressort, ladite extrémité étant accrochée sur la tête d'entraînement de l'essuie-glace.

Selon un deuxième aspect, l'étrier de retenue élastique est agencé autour des spires d'extrémité du ressort de pression d'essuyage, situées du côté de l'extrémité arrière dudit ressort, ladite extrémité étant accrochée sur la tête d'entraînement de l'essuie-glace.

Il suffit ainsi de fixer la canalisation d'alimentation au dispositif de maintien puis d'assembler l'étrier de retenue élastique soit en l'emboîtant au ressort de pression d'essuyage, soit en l'emboîtant dans la cavité de la partie carter autour du ressort, pour fixer la canalisation d'alimentation au bras d'actionnement. Ainsi retenue, la canalisation d'alimentation est dissimulée et protégée par un montage simple, rapide et peu coûteux.

Le dispositif de maintien guide en outre la canalisation d'alimentation à l'écart de la vitre à essuyer au cours du balayage et à l'écart de la grille en position de repos, sans avoir à mettre en oeuvre une opération de montage compliquée de la canalisation d'alimentation dans le ressort de pression d'essuyage.

En outre, le diamètre des spires du ressort de pression d'essuyage est très bien maîtrisé au niveau de sa géométrie et de son dimensionnel. Quelques modèles suffisent pour couvrir la majorité des modèles de véhicule. Par conséquent, dans le cas où le dispositif de maintien coopère avec le ressort de pression d'essuyage, le dispositif de maintien est polyvalent car il peut s'adapter à un grand nombre d'essuie-glaces de la gamme sans nécessiter de modification de la partie carter du bras d'actionnement.

Cette description donnée à titre d'exemple non limitatif, fera mieux comprendre comment l'invention peut être réalisée, en référence aux dessins annexés sur lesquels :
- la figure 1 représente un essuie-glace monté sur un véhicule automobile en position de repos, la tête d'entraînement et le bras d'actionnement étant représentés en transparence,
- la figure 2 est une vue de l'essuie-glace de la figure 1 au cours du balayage,
- la figure 3 représente un vue partielle des éléments en transparence de l'essuie-glace de la figure 1,
- la figure 4 est une vue agrandie d'un détail de la figure 3,
- la figure 5 est une vue similaire à la figure 4 ayant pivotée d'environ 180°,
- la figure 6 illustre un deuxième mode de réalisation d'un essuie-glace,
- la figure 7 représente une vue de dessous de l'essuie-glace de la figure 6,
- la figure 8 représente une autre vue de dessous de l'essuie-glace de la figure 6, et
- la figure 9 représente une vue agrandie d'un détail de l'essuie-glace de la figure 6, le bras d'actionnement étant représenté en transparence.

Sur ces figures, les éléments identiques portent les mêmes numéros de référence. Pour faciliter la compréhension, seuls les éléments nécessaires à la compréhension de l'invention sont représentés. Dans la suite de la description, on adoptera à titre non limitatif que la direction longitudinale correspond à la direction principale des balais d'essuie-glaces à plat. L'orientation « avant » désigne le côté de l'extrémité libre de l'essuie-glace lorsqu'il est monté dans le véhicule.

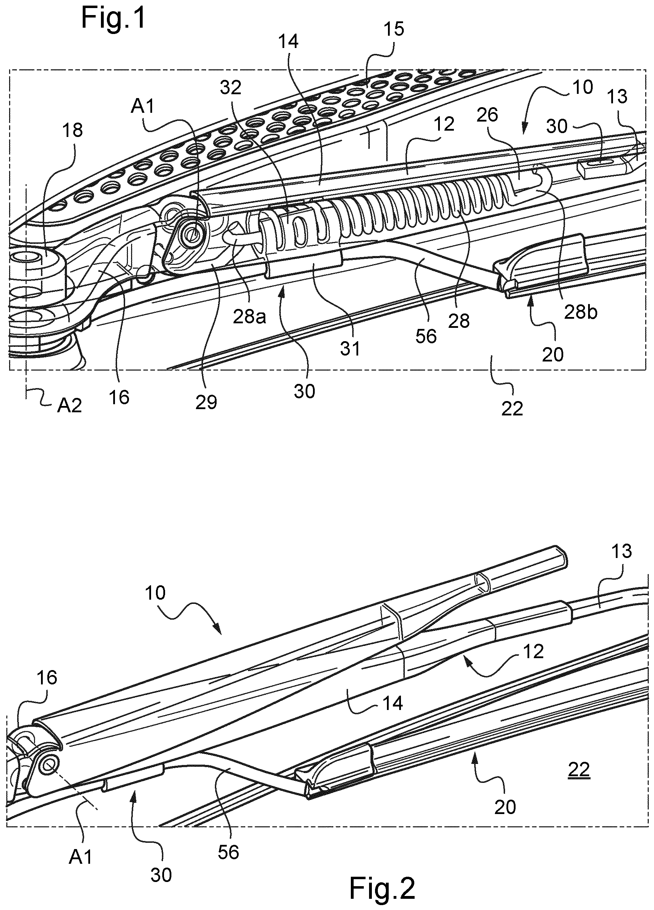

On a représenté sur les figures 1 à 5 un essuie-glace 10 de véhicule automobile qui comporte un bras d'actionnement 12 de balai d'essuyage et une tête d'entraînement 16.

La tête d'entraînement 16 est fixée à l'extrémité supérieure d'un arbre d'entraînement 18 en balayage rotatif alterné de l'essuie-glace 10 autour de l'axe de pivotement A2.

Le bras d'actionnement 12 est formé d'une partie carter 14 (ou extrémité longitudinale arrière) et d'une extrémité longitudinale avant 13 fixée à la partie carter 14 par un rétrécissement de la partie carter 14.

L'essuie-glace 10 comporte en outre un balai d'essuie-glace 20 monté à l'extrémité longitudinale avant 13 du bras 12 et qui est destiné à être plaqué contre une vitre 22 à essuyer. Le bras d'actionnement 12 et la tête d'entraînement 16 sont montés articulés autour d'un axe de pivotement transversal A1 permettant de soulever le bras d'actionnement 12 de la vitre à essuyer 22.

La partie carter 14 du bras 12 comporte, sensiblement sur toute sa longueur, une cavité 26, délimitée notamment par deux flancs internes longitudinaux et parallèles. La cavité 26 forme un « U » ouvert en direction de la vitre à essuyer 22 logeant notamment un ressort de pression d'essuyage 28 de l'essuie-glace 10, reliant la tête d'entraînement 16 à l'extrémité longitudinale avant 13.

De façon connue en soi, le ressort de pression d'essuyage 28 est un ressort hélicoïdal en traction présentant plusieurs spires enroulées entre une extrémité arrière 28a et une extrémité avant 28b, les extrémités arrière 28a et avant 28b présentant une prise pour un crochet.

Plus précisément en référence à la figure 1, l'extrémité arrière 28a du ressort de pression d'essuyage 28 est accrochée sur la tête d'entraînement 16 par un crochet 29 de l'essuie-glace. L'extrémité avant 28b du ressort 28, située du côté opposé, est destinée à être accrochée à l'extrémité longitudinale avant 13 qui porte le balai d'essuie-glace 20, en étant reçue dans un orifice 30 de l'extrémité longitudinale avant 13.

L'essuie-glace 10 comporte également un dispositif de projection de produit lave-glace (non représenté) qui est porté par le balai d'essuie-glace 20 dans cet exemple, et qui est destiné à être alimenté en liquide de lavage par une canalisation d'alimentation souple 56.

De manière connue, la canalisation d'alimentation 56 de l'essuie-glace 20 est reliée à un réservoir de liquide (non représenté) agencé à l'intérieur du véhicule.

L'essuie-glace comporte en outre un dispositif de maintien 30 au moins partiellement logé dans la cavité 26 de la partie carter 14 du bras d'actionnement 12, retenant la canalisation d'alimentation 56.

Le dispositif de maintien 30 comporte un moyen de fixation 31 de la canalisation d'alimentation 56 et un étrier de retenue élastique 32 présentant une ouverture dirigée vers l'intérieur de la cavité 26 et qui coopère avec la périphérie extérieure du ressort 28 pour retenir la canalisation d'alimentation 56 à la partie carter 14 du bras d'actionnement 12.

La canalisation d'alimentation 56 montée dans le véhicule forme une boucle autour de l'arbre d'entraînement 18 sous la tête d'entraînement 16, et est retenue au bras d'actionnement 12 par le dispositif de maintien 30, puis est portée par le balai d'essuie-glace 20.

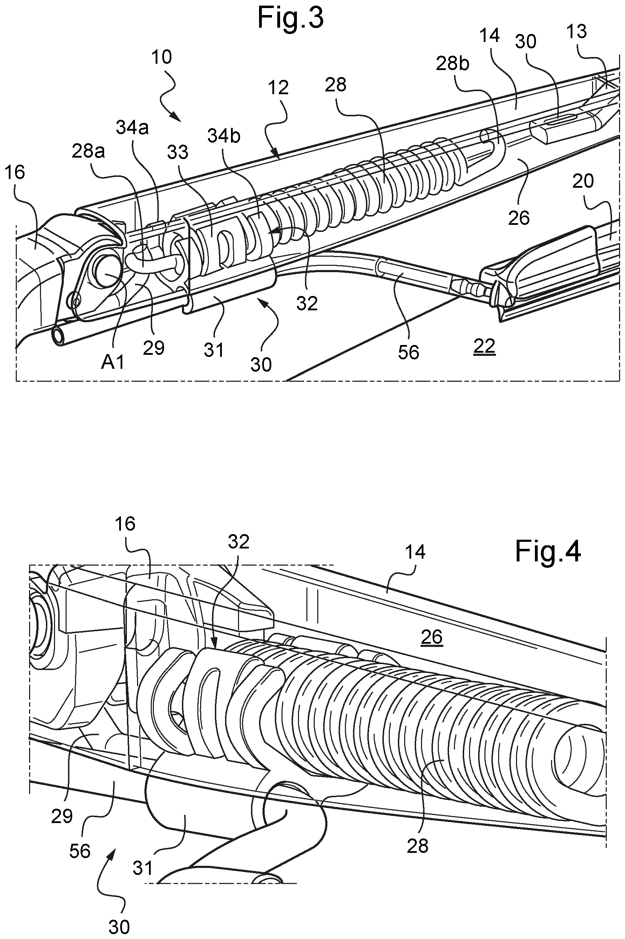

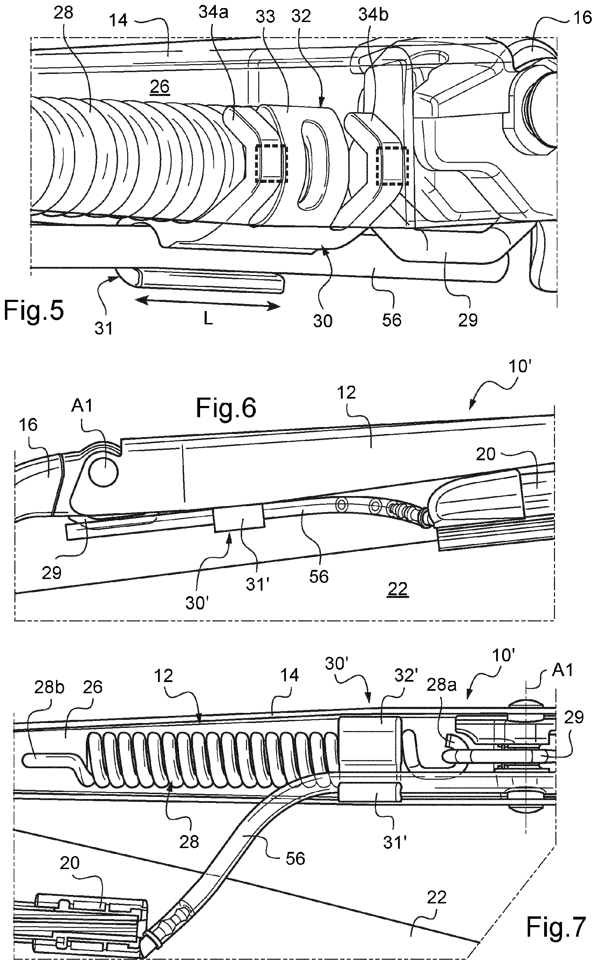

Mieux visible sur les figures 4 et 5, l'étrier de retenue 32 comporte une première fourche 33 et deux deuxièmes fourches 34a, 34b. La première fourche 33 est par exemple plus longue que les deuxièmes fourches 34a, 34b et est interposée entre les deux deuxièmes fourches 34a, 34b.

La première fourche 33 est emboîtée élastiquement aux spires du ressort de pression d'essuyage 28, par exemple autour des spires d'extrémité situées du côté de l'extrémité arrière 28a du ressort 28 (figures 1 et 3). Le dispositif de maintien 30 est ainsi agencé au plus prés de l'axe de pivotement A2, évitant ainsi les effets de « pompage » générant des variations de la longueur de la canalisation d'alimentation 56 entre les deux positions angulaires extrêmes de l'essuie-glace au cours du balayage.

Les deux deuxièmes fourches 34a, 34b coopèrent avec les flancs internes de la cavité 26 par déformation élastique. Plus précisément, lorsque l'étrier de retenue 32 est relâché dans la cavité 26, les branches des deuxièmes fourches 34a, 34b se déforment pour prendre appui contre les flancs internes de la cavité 26. En outre, les dos des branches peuvent présenter sensiblement en leur milieu, des portions planes qui, une fois relâchées dans la cavité 26, facilitent la prise d'appui contre les flancs internes de la cavité 26 (voir zones représentées en pointillés sur la figure 5).

La fonction principale de la première fourche 33 est de fixer fermement le dispositif de maintien 30 au bras d'actionnement 12, en évitant la translation le long du ressort 28. Les deuxièmes fourches 34a, 34b forment un moyen anti-rotation permettant d'éviter que le dispositif de maintien 30 tourne autour du ressort de pression d'essuyage 28.

Le moyen de fixation 31 de la canalisation d'alimentation 56 est par exemple un moyen de fixation amovible, tel qu'un clip.

Selon un exemple de réalisation robuste et à moindre coût, le dispositif de maintien 30 est réalisé en une seule pièce constituée de l'étrier de retenue et du moyen de fixation de la canalisation d'alimentation, le dos de l'étrier de retenue 32 et le dos du clip 31 étant partiellement confondus.

En outre, le dispositif de maintien 30 présente une longueur L supérieure à dix millimètres, telle que de l'ordre de quinze ou seize millimètres, ce qui améliore le guidage de la canalisation d'alimentation 56 à l'écart de la vitre à essuyer 22 au cours du balayage, et à l'écart de la grille 15 du véhicule en position de repos.

Il suffit ainsi de clipper la canalisation d'alimentation 56 au dispositif de maintien 30 puis d'emboîter l'étrier de retenue 32 au ressort de pression d'essuyage 28 pour fixer la canalisation d'alimentation 56 au bras d'actionnement 12. Ainsi retenue, la canalisation d'alimentation 56 est dissimulée et protégée par un montage simple, rapide et peu coûteux.

En outre, le diamètre des spires du ressort de pression d'essuyage 28 est très bien maîtrisé au niveau de sa géométrie et de son dimensionnel. Quelques modèles suffisent pour couvrir la majorité des modèles de véhicule. Etant donné que le dispositif de maintien 30 est emboîté au ressort 28 qui est quasiment standard, le dispositif de maintien 30 peut s'adapter à un grand nombre d'essuie-glaces de la gamme sans nécessiter de modification de la partie carter.

Les figures 6 à 9 représentent un essuie-glace 10' comportant un dispositif de maintien 30' selon un deuxième mode de réalisation. Dans cet exemple, seul le dispositif de maintien 30' diffère du dispositif de maintien 30 de l'essuie-glace 10 décrit dans le premier mode de réalisation.

Le dispositif de maintien 30' comporte un moyen de fixation 31' de la canalisation d'alimentation 56 et un étrier de retenue élastique 32' présentant une ouverture dirigée vers l'intérieur de la cavité 26. L'étrier de retenue 32' est agencé autour du ressort de pression d'essuyage 28 mais ne coopère pas avec celui-ci. Dans ce deuxième cas, l'étrier de retenue coopère avec les flancs internes de la cavité 26 de la partie carter 14 du bras 12 pour retenir la canalisation d'alimentation 56.

L'étrier de retenue élastique 32' coopère avec les flancs internes de la cavité 26 par déformation élastique. Plus précisément, lorsque l'étrier de retenue 32' est relâché dans la cavité 26, les branches formant l'étrier de retenue 32' se déforment pour prendre appui contre les flancs internes de la cavité 26.

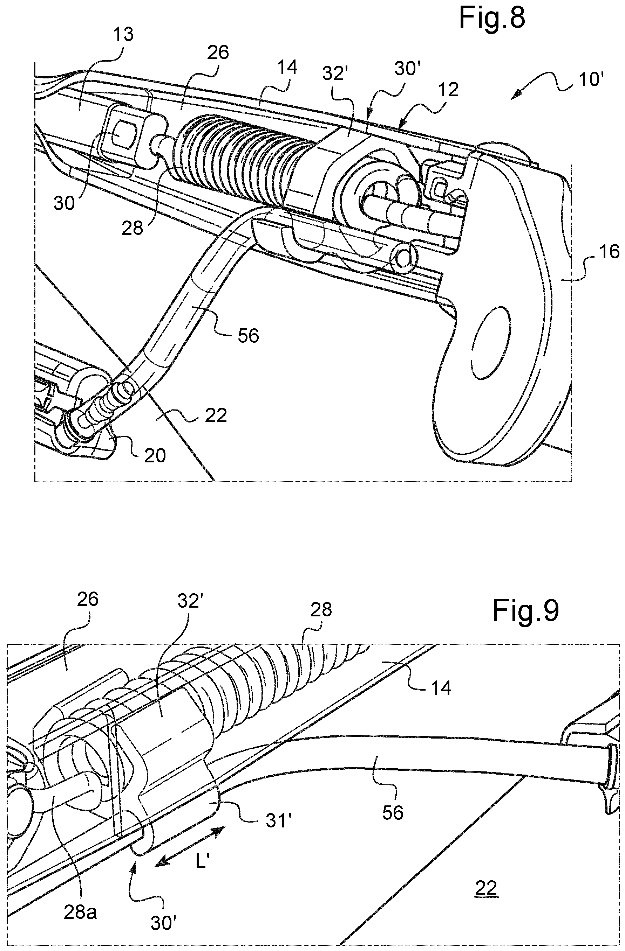

Chaque branche formant l'étrier de retenue 32' possède une forme sensiblement complémentaire à au moins une partie des spires de ressort disposées à proximité desdites branches. Ainsi, comme cela est visible aux figures 8 et 9, chaque branche 32' forme sensiblement un arc de cercle dont le secteur angulaire est centré sur l'axe du ressort. De préférence, le secteur angulaire de chaque branche est compris entre 70 et 170 degrés et plus particulièrement entre 100 et 150 degrés.L'étrier de retenue élastique 32' est agencé autour du ressort 28 par exemple du côté des spires d'extrémité situées du côté de l'extrémité arrière 28a du ressort 28 (figures 7 et 8). Le dispositif de maintien 30' est ainsi agencé au plus prés de l'axe de pivotement A2, évitant ainsi les effets de « pompage » générant des variations de la longueur de la canalisation d'alimentation 56 entre les deux positions angulaires extrêmes de l'essuie-glace au cours du balayage.

En plus de la fonction de maintien de la canalisation 56 au bras d'actionnement 12, l'étrier de retenue 32' empêche que le dispositif de maintien 30' tourne autour du ressort de pression d'essuyage 28.

Il suffit ainsi de clipper la canalisation d'alimentation 56 au dispositif de maintien 30' puis de pincer et relâcher l'étrier de retenue 32' dans la cavité 26 autour du ressort 28 pour fixer la canalisation d'alimentation 56 à la partie carter 14 du bras d'actionnement 12. Ainsi retenue, la canalisation d'alimentation 56 est dissimulée et protégée par un montage simple, rapide et peu coûteux.L'invention couvre également un dispositif de maintien dans lequel l'étrier de retenue élastique 32 configuré pour coopérer avec la périphérie extérieure d'un ressort de pression ne coopère pas avec les flancs internes de la cavité 26 de la partie de carter du bras d'actionnement 12. Ainsi, dans ce mode de réalisation, l'étrier est seulement retenu par sa coopération avec le ressort de pression.

Ainsi, l'invention concerne un dispositif de maintien d'une canalisation d'alimentation 56 en produit lave-glace à un bras d'actionnement 12 de balai d'essuie-glace 20 de véhicule automobile, dans lequel le dispositif de maintien comporte :
- un moyen de fixation 31 de la canalisation d'alimentation 56 et
- un étrier de retenue élastique 32 configuré pour coopérer avec la périphérie extérieure d'un ressort de pression d'essuyage 28 logé dans une cavité 26 de la partie carter 14 du bras d'actionnement 12 pour retenir la canalisation d'alimentation 56 au bras d'actionnement 12.

## Revendications

1. Dispositif de maintien d'une canalisation d'alimentation (56) en produit lave-glace à un bras d'actionnement (12) de balai d'essuie-glace (20) de véhicule automobile, ledit dispositif de maintien comportant un moyen de fixation (31 ; 31') de la canalisation d'alimentation (56), **caractérisé en ce qu'**il comporte en outre un étrier de retenue élastique (32 ; 32') possédant une forme sensiblement complémentaire à au moins une partie du ressort disposée à proximité dudit étrier, ledit étrier de retenue élastique (32 ; 32') étant configuré pour coopérer avec la périphérie extérieure d'un ressort de pression d'essuyage (28) logé dans une cavité (26) de la partie carter (14) du bras d'actionnement (12) ou configuré pour être agencé autour d'un ressort de pression d'essuyage (28) logé dans une cavité (26) de la partie carter (14) du bras d'actionnement (12) et configuré pour coopérer avec les flancs internes de ladite cavité (26), pour retenir la canalisation d'alimentation (56) au bras d'actionnement (12).

2. Dispositif de maintien selon la revendication 1, **caractérisé en ce que** l'étrier de retenue (32) comporte une première fourche (33) configuré pour s'emboîter élastiquement sur les spires du ressort de pression d'essuyage (28).

3. Dispositif de maintien selon la revendication 2, **caractérisé en ce que** l'étrier de retenue (32) comporte un moyen anti-rotation.

4. Dispositif de maintien selon la revendication 3, **caractérisé en ce que** le moyen anti-rotation est formé par au moins une deuxième fourche (34a, 34b) pouvant coopérer avec les flancs internes de la cavité (26) par déformation élastique.

5. Dispositif de maintien selon la revendication 4, **caractérisé en ce qu'**il comporte deux deuxièmes fourches (34a, 34b), la première fourche (33) étant plus longue que les deuxièmes fourches (34a, 34b) et la première fourche (33) étant interposée entre les deux deuxièmes fourches (34a, 34b).

6. Dispositif de maintien selon la revendication 1, **caractérisé en ce que** l'étrier de retenue (32) comporte une première branche formant sensiblement un arc de cercle, le secteur angulaire dudit arc étant de préférence centré sur l'axe du ressort.

7. Dispositif de maintien selon la revendication 6, **caractérisé en ce que** l'étrier de retenue (32) comporte une deuxième branche (32') formant sensiblement un arc de cercle, le secteur angulaire dudit arc étant de préférence centré sur l'axe du ressort.

8. Dispositif de maintien selon la revendication 6 ou 7, **caractérisé en ce que** le secteur angulaire de ladite première branche (32') et/ou de ladite deuxième branche (32') est compris entre 70 et 170 degrés, et de préférence entre 100 et 150 degrés.

9. Dispositif de maintien selon l'une des revendications précédentes, **caractérisé en ce que** ledit moyen de fixation (31 ; 31') de la canalisation d'alimentation (56) comporte un clip.

10. Dispositif de maintien selon l'une des revendications précédentes, **caractérisé en ce qu'**il est réalisé en une seule pièce constituée de l'étrier de retenue (32, 32') et du moyen de fixation (31 ; 31') de la canalisation d'alimentation (56).

11. Dispositif de maintien selon l'une des revendications précédentes, **caractérisé en ce qu'**il présente une longueur (L) supérieure à dix millimètres.

12. Essuie-glace comportant un bras d'actionnement (12) de balai d'essuyage et une canalisation d'alimentation (56) de dispositif de projection de produit lave-glace, **caractérisé en ce qu'**il comporte un dispositif de maintien (30 ; 30') selon l'une des revendications précédentes, au moins partiellement logé dans la cavité (26) du bras d'actionnement (12), retenant la canalisation d'alimentation (56) au bras d'actionnement (12).

13. Essuie-glace selon la revendication 12, prise ensemble avec l'une des revendications 1 à 5, **caractérisé en ce que** l'étrier de retenue élastique (32) est emboîté élastiquement autour des spires d'extrémité du ressort de pression d'essuyage (28), situées du côté de l'extrémité arrière (28a) dudit ressort (28) accrochée sur la tête d'entraînement (16) de l'essuie-glace.

14. Essuie-glace selon la revendication 12, prise ensemble avec l'une des revendications 1 ou 6 à 11, **caractérisé en ce que** l'étrier de retenue élastique (32') est agencé autour des spires d'extrémité du ressort de pression d'essuyage (28), situées du côté de l'extrémité arrière (28a) dudit ressort (28) accrochée sur la tête d'entraînement (16) de l'essuie-glace.

## Patentansprüche

1. Vorrichtung zum Halten einer Leitung (56) zur Versorgung eines Betätigungsarms (12) eines Scheibenwischers (20) eines Kraftfahrzeugs mit einem Scheibenwaschprodukt, wobei die Befestigungsvorrichtung ein Mittel (31; 31') zur Befestigung der Versorgungsleitung (56) aufweist, **dadurch gekennzeichnet, dass** sie außerdem einen elastischen Rückhaltebügel (32; 32') aufweist, welcher eine zu mindestens einem Abschnitt der in der Nähe des Bügels angeordneten Feder im Wesentlichen komplementäre Form besitzt, wobei der elastische Rückhaltebügel (32; 32') dafür ausgelegt ist, um mit dem äußeren Umfang einer Wischerdruckfeder (28) zusammenzuwirken, welche in einem Hohlraum (26) des Gehäuseabschnitts (14) des Betätigungsarms (12) aufgenommen ist, oder dafür ausgelegt ist, um eine Wischerdruckfeder (28) eingerichtet zu sein, welche in einem Hohlraum (26) des Gehäuseabschnitts (14) des Betätigungsarms (12) aufgenommen ist, und dafür ausgelegt ist, um mit den inneren Seiten des Hohlraums (26) zusammenzuwirken, um die Versorgungsleitung (56) am Betätigungsarm (12) festzuhalten.

2. Haltevorrichtung nach Anspruch 1, **dadurch gekennzeichnet, dass** der Rückhaltebügel (32) eine erste Gabel (33) aufweist, welche dafür ausgelegt ist, um sich elastisch an den Windungen der Wischerdruckfeder (28) anzuschmiegen.

3. Haltevorrichtung nach Anspruch 2, **dadurch gekennzeichnet, dass** der Haltebügel (32) ein Mittel zur Verdrehsicherung aufweist.

4. Haltevorrichtung nach Anspruch 3, **dadurch gekennzeichnet, dass** das Mittel zur Verdrehsicherung von mindestens einer zweiten Gabel (34a, 34b) gebildet wird, welche mit den inneren Seiten des Hohlraums (26) durch elastische Verformung zusammenwirken kann.

5. Haltevorrichtung nach Anspruch 4, **dadurch gekennzeichnet, dass** sie zwei zweite Gabeln (34a, 34b) aufweist, wobei die erste Gabel (33) länger als die zweiten Gabeln (34a, 34b) ist und die erste Gabel (33) zwischen den beiden zweiten Gaben (34a, 34b) eingefügt ist.

6. Haltevorrichtung nach Anspruch 1, **dadurch gekennzeichnet, dass** der Rückhaltebügel (32) einen ersten Zweig aufweist, welcher im Wesentlichen einen Kreisbogen bildet, wobei der bogenförmige Abschnitt des Bogens vorzugsweise zu der Achse der Feder zentriert ist.

7. Haltevorrichtung nach Anspruch 6, **dadurch gekennzeichnet, dass** der Rückhaltebügel (32) einen zweiten Zweig (32') aufweist, welcher im Wesentlichen einen Kreisbogen bildet, wobei der bogenförmige Abschnitt des Bogens vorzugsweise zu der Achse der Feder zentriert ist.

8. Haltevorrichtung nach Anspruch 6 oder 7, **dadurch gekennzeichnet, dass** der bogenförmige Abschnitt des ersten Zweiges (32') und/oder des zweiten Zweiges (32') zwischen 70 und 170 Grad, und vorzugsweise zwischen 100 und 150 Grad, liegt.

9. Haltevorrichtung nach einem der vorhergehenden Ansprüche, **dadurch gekennzeichnet, dass** das Befestigungsmittel (31; 31') der Versorgungsleitung (56) einen Clip aufweist.

10. Haltevorrichtung nach einem der vorhergehenden Ansprüche, **dadurch gekennzeichnet, dass** sie aus einem einzigen Teil hergestellt ist, welches von dem Haltebügel (32; 32') und dem Befestigungsmittel (31; 31') der Versorgungsleitung (56) gebildet wird.

11. Haltevorrichtung nach einem der vorhergehenden Ansprüche, **dadurch gekennzeichnet, dass** sie eine Länge (L) aufweist, welche größer als 10 Millimeter ist.

12. Scheibenwischer, aufweisend einen Betätigungsarm (12) für ein Scheibenwischerblatt und eine Leitung zur Versorgung (56) einer Spritzvorrichtung eines Scheibenwaschprodukts, **dadurch gekennzeichnet, dass** er eine Haltevorrichtung (30; 30') nach einem der vorhergehenden Ansprüche aufweist, welche zumindest teilweise in dem Hohlraum (26) des Betätigungsarms (12) untergebracht ist, um die Versorgungsleitung (56) an dem Betätigungsarm (12) festzuhalten.

13. Scheibenwischer nach Anspruch 12 in Verbindung mit einem der Ansprüche 1 bis 5, **dadurch gekennzeichnet, dass** der elastische Haltebügel (32) elastisch um die Endwicklungen der Wischerdruckfeder (28) angelegt ist, welche auf der Seite des hinteren Endes (28a) der Feder (28) angeordnet sind, welches an dem Antriebskopf (16) des Scheibenwischers eingehakt ist.

14. Scheibenwischer nach Anspruch 12 in Verbindung mit einem der Ansprüche 1 oder 6 bis 11, **dadurch gekennzeichnet, dass** der elastische Haltebügel (32') um die Endwicklungen der Wischerdruckfeder (28) eingerichtet ist, welche auf der Seite des hinteren Endes (28a) der Feder (28) angeordnet sind, welches an dem Antriebskopf (16) des Scheibenwischers eingehakt ist.

## Claims

1. Device for securing a screen wash product supply duct (56) on an actuating arm (12) of a windscreen wiper blade (20) of a motor vehicle, said securing device comprising a means (31; 31') for fixing the supply duct (56), **characterized in that** it additionally comprises an elastic retaining stirrup (32; 32') having a shape substantially complementary to at least a part of the spring arranged in the vicinity of said stirrup, said elastic retaining stirrup (32; 32') being configured to cooperate with the outer periphery of a wiping pressure spring (28) housed in a cavity (26) of the housing part (14) of the actuating arm (12) or configured to be arranged around a wiping pressure spring (28) housed in a cavity (26) of the housing part (14) of the actuating arm (12) and configured to cooperate with the internal flanks of said cavity (26), in order to retain the supply duct (56) on the actuating arm (12).

2. Securing device according to Claim 1, **characterized in that** the retaining stirrup (32) comprises a first fork (33) configured to fit elastically on the turns of the wiping pressure spring (28).

3. Securing device according to Claim 2, **characterized in that** the retaining stirrup (32) comprises an anti-rotation means.

4. Securing device according to Claim 3, **characterized in that** the anti-rotation means is formed by at least a second fork (34a, 34b) which can cooperate with the internal flanks of the cavity (26) by elastic deformation.

5. Securing device according to Claim 4, **characterized in that** it comprises two second forks (34a, 34b), the first fork (33) being longer than the second forks (34a, 34b) and the first fork (33) being interposed between the two second forks (34a, 34b).

6. Securing device according to Claim 1, **characterized in that** the retaining stirrup (32) comprises a first branch substantially forming an arc of a circle, the angular sector of said arc preferably being centred on the axis of the spring.

7. Securing device according to Claim 6, **characterized in that** the retaining stirrup (32) comprises a second branch (32') substantially forming an arc of a circle, the angular sector of said arc preferably being centred on the axis of the spring.

8. Securing device according to Claim 6 or 7, **characterized in that** the angular sector of said first branch (32') and/or of said second branch (32') is between 70 and 170 degrees, preferably between 100 and 150 degrees.

9. Securing device according to one of the preceding claims, **characterized in that** said means (31; 31') for fixing the supply duct (56) comprises a clip.

10. Securing device according to one of the preceding claims, **characterized in that** it is produced as a single piece consisting of the retaining stirrup (32, 32') and of the means (31; 31') for fixing the supply duct (56).

11. Securing device according to one of the preceding claims, **characterized in that** it has a length (L) of more than ten millimetres.

12. Windscreen wiper comprising a wiper blade actuating arm (12) and a supply duct (56) of a device for spraying screen wash product, **characterized in that** it comprises a securing device (30; 30') according to one of the preceding claims, at least partially housed in the cavity (26) of the actuating arm (12), retaining the supply duct (56) on the actuating arm (12).

13. Windscreen wiper according to Claim 12, taken together with one of Claims 1 to 5, **characterized in that** the elastic retaining stirrup (32) is fitted elastically around the end turns of the wiping pressure spring (28) which are situated in the region of the rear end (28a) of said spring (28), which end is attached to the drive head (16) of the windscreen wiper.

14. Windscreen wiper according to Claim 12, taken together with one of Claims 1 or 6 to 11, **characterized in that** the elastic retaining stirrup (32') is arranged around the end turns of the wiping pressure spring (28) which are situated in the region of the rear end (28a) of said spring (28), which end is attached to the drive head (16) of the windscreen wiper.
